# EUROPEAN PATENT APPLICATION

(11) **EP 3 147 814 A1**
(43) Date of publication of application: **29.03.2017**
(21) Application number: 14892423.6
(22) Date of filing: 15.09.2014
(51) Int. Cl.: G06K 7/10, G06K 19/07, H04B 10/25

(54) **PASSIVE OPTICAL TAG, OPTICAL READ/WRITE DEVICE AND INTELLIGENT OPTICAL DISTRIBUTION NETWORK**

(30) Priority: 19.05.2014 CN 201410211352
(71) Applicant: ZTE Corporation, Shenzhen, Guangdong 518057 (CN)
(72) Inventor: XU, Jidong, Shenzhen Guangdong 518057 (CN); FU, Zhiming, Shenzhen Guangdong 518057 (CN); LU, Jianxin, Shenzhen Guangdong 518057 (CN); GONG, Yu, Shenzhen Guangdong 518057 (CN)
(74) Representative: Winter, Brandl, Fürniss, Hübner, Röss, Kaiser, Polte - Partnerschaft mbB
(86) International application number: PCT/CN2014/086551
(87) International publication number: WO 2015/176426

(57) **Abstract**

Disclosed are a passive optical tag, an optical read/write device and an intelligent optical distribution network. The passive optical tag includes: an optical receiver, an optical transmitter, a chip and a photocell, where the optical receiver is connected with the chip and is configured to receive an optical signal, convert the optical signal into an electrical signal and send the electrical signal to the chip; the chip is configured to process the electrical signal and store tag information; the optical transmitter is connected with the chip and is configured to modulate the electrical signal sent by the chip into an optical signal and transmit the optical signal obtained by modulation; and the photocell is configured to convert optical energy into electrical energy and store the electrical energy, and provide electrical energy to the optical receiver, the optical transmitter and the chip. The passive optical tag stores and reads the tag information in a non-contact manner without need for connection with a power supply, and the passive optical tag is small in volume and is suitable for an application scene with dense optical connection heads.

## Description

### TECHNICAL FIELD

The present invention relates to the field of communications, and in particular relates to a passive optical tag, an optical read/write device and an intelligent optical distribution network.

### BACKGROUND

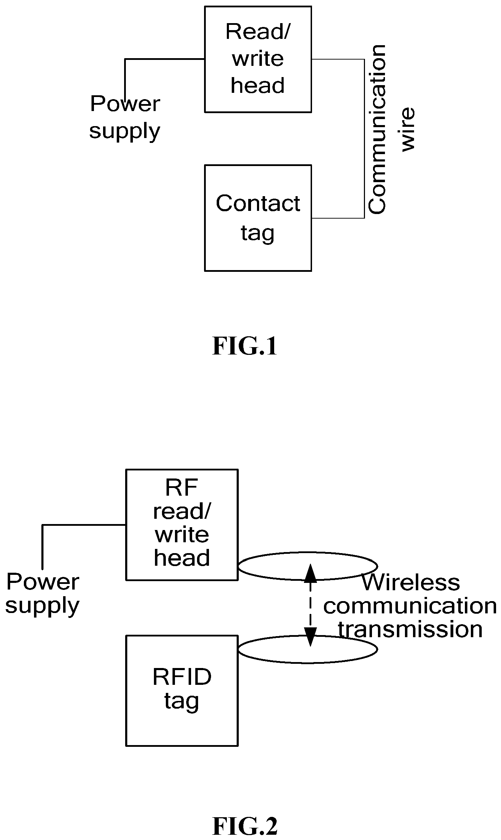

A variety of tag technologies existing in relevant technologies of intelligent optical distribution networks (ODN), includes a contact-type tag technology and a non-contact-type tag technology, as shown in Fig. 1 and Fig. 2 respectively.

Fig. 1 is a schematic diagram illustrating the contact-type tag technology according to a relevant technology. As shown in Fig. 1, a contact-type tag typically including a 1-Wire interface or EEPROM interface is adopted. Additionally, the tag needs to be powered. The contact-type tag technology proposes higher requirements for design and reliability of structural of the tag. Meanwhile, the contact-type tag technology is not flexible enough due to physical connection in some rebuilding scenes.

Fig. 2 is a schematic diagram illustrating the non-contact-type tag technology according to a relevant technology. As shown in Fig. 2, a non-contact-type tag typically including Radio Frequency Identification (RFID) technology is adopted. Due to working principle of an RFID tag, namely, magnetic lines are cut to generate induction current, a coil of the RFID tag is required to have a certain working area so as to generate enough induction current for driving a chip to work normally. Meanwhile, a working coil of an optical read/write device is also required to have a certain working area, causing that adjacent RFIDs are also induced and thus causing mutual interference. Therefore, this technology is unsuitable for dense working environments.

Above all, the contact-type tag technology is complex in structure and inflexible in connection, and the RFID is unsuitable for dense working environments. No effective solution has been proposed so far with regard to above problems in relevant technologies.

### SUMMARY

For the problems in relevant technologies that a contact-type tag is complex in structure and inflexible in connection, and a non-contact-type tag can cause mutual interference in a dense working environment, the present invention provides a passive optical tag, an optical read/write device and an intelligent optical distribution network, so as to at least solve above problems.

According to one aspect of the present invention, the present invention provides a passive optical tag, including: an optical receiver, an optical transmitter, a chip and a photocell, where the optical receiver is connected with the chip and is configured to receive an optical signal, convert the optical signal into an electrical signal and send the electrical signal to the chip; the chip is configured to process the electrical signal and store tag information; the optical transmitter is connected with the chip and is configured to modulate the electrical signal sent by the chip into an optical signal and transmit the optical signal obtained by modulation; and the photocell is configured to convert optical energy into electrical energy and store the electrical energy, and provide electrical energy to the optical receiver, the optical transmitter and the chip.

Preferably, the photocell is configured to receive the optical energy from the optical read/write device of the passive optical tag and/or receive the optical energy from other optical sources.

Preferably, the optical transmitter includes: a light emitting diode (LED).

According to another aspect of the present invention, the present invention provides a passive optical tag, including: an optical transmitter, a chip and a photovoltaic cell receiver, where the photovoltaic cell receiver is connected with the chip and is configured to convert optical energy into electrical energy and provide electrical energy to the chip and the optical transmitter; and, receive a pulse-type optical signal, convert the pulse-type optical signal into a digital electrical signal and send the digital electrical signal to the chip; the chip is configured to process the digital electrical signal and store tag information; and the optical transmitter is connected with the chip and is configured to modulate the electrical signal sent by the chip into an optical signal and transmit the optical signal obtained by modulation.

Preferably, the optical transmitter includes: an LED.

According to another aspect of the present invention, the present invention provides an optical read/write device, including: an optical receiver, an optical transmitter and a chip, where the optical receiver is connected with the chip and is configured to receive an optical signal, convert the optical signal into an electrical signal and send the electrical signal to the chip; the chip is configured to process the electrical signal, perform a read/write operation on an optical tag and store and compare tag information; and the optical transmitter is connected with the chip and is configured to modulate the electrical signal of the chip into an optical signal and transmit the optical signal obtained by modulation.

Preferably, the optical transmitter includes: an LED and/or a laser diode (LD).

Preferably, the optical read/write device further includes: a communication device, configured to perform communication with other devices.

According to another aspect of the present invention, the present invention provides a passive optical tag system, including: a passive optical tag and an optical read/write device, where
the passive optical tag includes: a first optical receiver, a first optical transmitter, a first chip and a photocell, where the first optical receiver is connected with the first chip and is configured to receive a first optical signal, convert the first optical signal into a first electrical signal and send the first electrical signal to the first chip; the first chip is configured to process the first electrical signal and store tag information; the first optical transmitter is connected with the first chip and is configured to modulate the electrical signal sent by the first chip into a second optical signal and transmit the second optical signal; and the photocell is configured to convert optical energy into electrical energy and store the electrical energy, and provide electrical energy to the first optical receiver, the first optical transmitter and the first chip; and
the optical read/write device includes: a second optical receiver, a second optical transmitter and a second chip, where the second optical receiver is connected with the second chip and is configured to receive a third optical signal, convert the third optical signal into a second electrical signal and send the second electrical signal to the second chip; the second chip is configured to process the second electrical signal and perform a read/write operation on the passive optical tag; and the second optical transmitter is connected with the second chip and is configured to modulate the electrical signal of the second chip into a fourth optical signal and transmit the fourth optical signal.

According to another aspect of the present invention, the present invention provides a passive optical tag system, including: a passive optical tag and an optical read/write device, where
the passive optical tag includes: a first optical transmitter, a first chip and a photovoltaic cell receiver, where the photovoltaic cell receiver is connected with the first chip and is configured to convert optical energy into electrical energy and provide electrical energy to the first chip and the first optical transmitter; and receive a pulse-type optical signal, convert the pulse-type optical signal into a digital electrical signal and send the digital electrical signal to the first chip; the first chip is configured to process the digital electrical signal and store tag information; and the first optical transmitter is connected with the first chip and is configured to modulate the electrical signal sent by the first chip into a first optical signal and transmit the first optical signal; and
the optical read/write device includes: an optical receiver, a second optical transmitter and a second chip, where the optical receiver is connected with the second chip and is configured to receive a second optical signal, convert the second optical signal into an electrical signal and send the electrical signal to the second chip; the second chip is configured to process the electrical signal and perform a read/write operation on the passive optical tag; and the second optical transmitter is connected with the second chip and is configured to modulate the electrical signal of the second chip into a third optical signal and transmit the third optical signal.

According to another aspect of the present invention, the present invention provides an intelligent optical distribution network, including: a connecting box including a plurality of connector ports; and a plurality of cables, where each cable includes opposite tail ends and corresponding connectors fixed on each of the tail ends, and each connector is configured to be detachably fixed in each of the connector ports;
each connector is provided with one above passive optical tag, where each passive optical tag stores own tag identity information;
each connector port is provided with one above optical read/write device, and each optical read/write device is arranged at a position that enables the optical read/write device to be in alignment to the passive optical tag on the connector when the connector is inserted into the connector port;
each optical read/write device is configured to perform a read/write operation on a passive optical tag corresponding to the own optical read/write device; and each passive optical tag is configured to respond to a read/write operation of an optical read/write device corresponding to the own passive optical tag.

Preferably, each optical read/write device is further configured to perform communication with a network management system and receive a message of the network management system and/or send information to the network management system.

Preferably, each optical read/write device is configured to respond to a request of the network management system to perform a read/write operation on a passive optical tag corresponding to the own optical read/write device.

Preferably, the intelligent optical distribution network further includes: a management device, configured to control each optical read/write device and report information reported by each optical read/write device to the network management system.

According to another aspect of the present invention, the present invention provides a read/write method of a passive optical tag, including: sending, by an optical read/write device, a first instruction to the passive optical tag, where the first instruction is configured to inquire a tag state; and receiving, by the optical read/write device, a first optical signal sent by the passive optical tag after the passive optical tag receives the first instruction, where the first optical signal carries a current state of the passive optical tag.

Preferably, the above method further includes: sending, by the optical read/write device, a second instruction to the passive optical tag, where the second instruction is configured to inquire identity information of the passive optical tag;

Preferably, the above method further includes: judging, by the optical read/write device, whether the identity information is correct; and assigning, by the optical read/write device, new identity information to the passive optical tag when the identity information is wrong.

Preferably, the above method further includes: judging, by the optical read/write device, whether the identity information is blank; and assigning, by the optical read/write device, new identity information to the passive optical tag when the identity information is blank.

Preferably, the above method further includes: sending, by the optical read/write device, a third instruction to the passive optical tag, where the third instruction is configured to assign identity information to the passive optical tag.

Preferably, the above method further includes: sending, by the optical read/write device, a fourth instruction to the passive optical tag, where the fourth instruction is configured to instruct that communication is ended; and receiving, by the optical read/write device, a fourth optical signal sent by the passive optical tag after the passive optical tag receives the fourth instruction, where the fourth optical signal carries information of agreeing to the ending.

According to another aspect of the present invention, the present invention provides a read/write device of a passive optical tag, including: a first sending module, configured to send a first instruction to the passive optical tag, where the first instruction is configured to inquire a tag state; and a first receiving module, configured to receive a first optical signal sent by the passive optical tag after the passive optical tag receives the first instruction, where the first optical signal carries a current state of the passive optical tag.

Preferably, the read/write device further includes a second sending module, configured to send a second instruction to the passive optical tag, where the second instruction is configured to inquire identity information of the passive optical tag; and a second receiving module, configured to receive a second optical signal sent by the passive optical tag after the passive optical tag receives the second instruction, where the second optical signal carries the identity information.

Preferably, the above device further includes: a first judgment module, configured to judge whether the identity information is correct; and a first assigning module, configured to assign new identity information to the passive optical tag when the identity information is wrong.

Preferably, the above device further includes: a second judgment module, configured to judge whether the identity information is blank; and a second assigning module, configured to assign new identity information to the passive optical tag when the identity information is blank.

Preferably, the above device further includes: a third sending module, configured to send a third instruction to the passive optical tag, where the third instruction is configured to assign identity information to the passive optical tag.

Preferably, the above device further includes: a fourth sending module, configured to send a fourth instruction to the passive optical tag, where the fourth instruction is configured to instruct that communication is ended; and a fourth receiving module, configured to receive a fourth optical signal sent by the passive optical tag after the passive optical tag receives the fourth instruction, where the fourth optical signal carries information of agreeing to the ending.

Through the present invention, the passive optical tag stores and reads the tag information in a non-contact manner without need for connection with a power supply, and the passive optical tag is small in volume and is suitable for an application scene with dense optical connection heads.

### BRIEF DESCRIPTION OF DRAWINGS

Drawings described here are used for providing further understanding for the present invention and form a part of the present application. Exemplary embodiments of the present invention and the description for the exemplary embodiments are used for explaining the present invention, rather than limiting the present invention. In the drawings:
Fig. 1 is a schematic diagram illustrating a contact-type tag technology according to a relevant technology;
Fig. 2 is a schematic diagram illustrating a non-contact-type tag technology according to a relevant technology;
Fig. 3 is a structural block diagram illustrating a passive optical tag according to embodiments of the present invention;
Fig. 4 is a structural block diagram illustrating a preferable passive optical tag according to embodiments of the present invention;
Fig. 5 is a structural block diagram illustrating an optical read/write device according to embodiments of the present invention;
Fig. 6 is a schematic diagram illustrating an optical frequency identification system according to embodiments of the present invention;
Fig. 7 is a flow chart illustrating a read/write method of a passive optical tag according to embodiments of the present invention;
Fig. 8 is a structural block diagram illustrating a read/write device of a passive optical tag according to embodiments of the present invention;
Fig. 9 is a schematic diagram illustrating an optical connection head according to embodiments of the present invention;
Fig. 10 is a schematic diagram illustrating communication between an optical read/write device and a passive optical tag according to embodiments of the present invention.

### DETAILED DESCRIPTION

The present invention is described below in detail with reference to the drawings and in combination with embodiments. It should be noted that embodiments in the present application can be combined with the features in embodiments under the condition of no conflict.

Embodiments of the present invention provide a non-contact-type optical frequency identification (OFID) technology, including a passive optical tag and an optical read/write device, which can well solve above problems of RFID in an intelligent ODN, but embodiments of the present invention are not limited thereto.

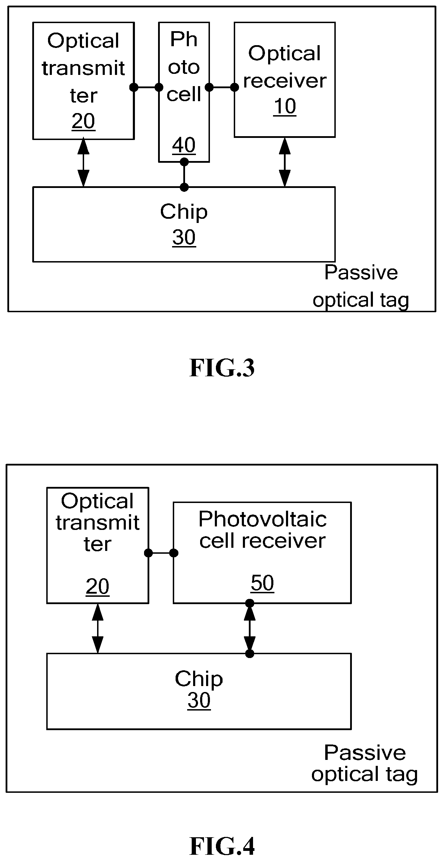

Fig. 3 is a structural block diagram illustrating a passive optical tag according to embodiments of the present invention. As shown in Fig. 3, the passive optical tag includes: an optical receiver 10, an optical transmitter 20, a chip 30 and a photocell 40, where the optical receiver 10 is connected with the chip 30 and is configured to receive an optical signal, convert the optical signal into an electrical signal and send the electrical signal to the chip 30; the chip 30 is configured to process the electrical signal and store tag information; the optical transmitter 20 is connected with the chip 30 and is configured to modulate the electrical signal sent by the chip 30 into an optical signal and transmit the optical signal obtained by modulation; and the photocell 40 is configured to convert optical energy into electrical energy, store the electrical energy and provide electrical energy to the optical receiver 10, the optical transmitter 20 and the chip 30.

A passive optical tag is realized according to embodiments of the present invention.

In an implementation manner of embodiments of the present invention, the photocell 40 may have dual functions. Besides converting optical energy into electrical energy, the photocell 40 may further convert a pulse-type optical signal into a digital electrical signal, so that the photocell 40 has a function of replacing the optical receiver 10. In actual application, the photocell 40 and the optical receiver 10 can be integrated as one device. As shown in Fig. 4, the device is a photovoltaic cell receiver 50.

In an implementation manner of embodiments of the present invention, the photocell 40 is configured to receive optical energy from outside of the passive optical tag. The external optical energy may be visible light or infrared light, or an optical signal transmitted by a tag read/write device.

In an implementation manner of embodiments of the present invention, the passive optical tag may further include a memory which is configured to store information; and the chip 30 is further configured to write information to the memory and/or read information from the memory.

In embodiments of the present invention, the chip 30 may be configured to receive a read instruction of a tag reading device through the optical receiver 10, read stored information and send the information to the tag reading device through the optical transmitter 20. Of course, the above chip 30 may further receive a writing operation of the tag reading device, perform the writing operation and store written information.

In embodiments of the present invention, the optical receiver 10 transmits a received data signal to the chip 30, and the chip 30 starts the optical transmitter 20 as required after data are processed so as to transmit a replay signal to the optical read/write device.

In an implementation manner of embodiments of the present invention, the optical transmitter 20 may include an LED and the like. The optical receiver 10 may include a photon receiver and the like.

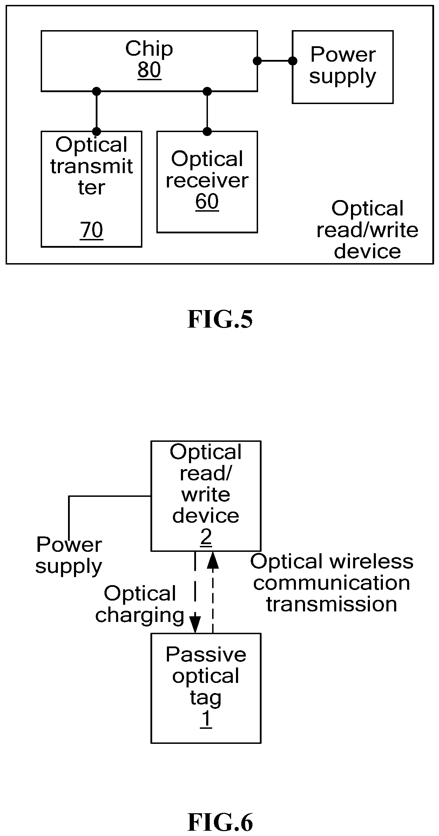

Fig. 5 is a structural block diagram illustrating an optical read/write device according to embodiments of the present invention. As shown in Fig. 5, the device includes: an optical receiver 60, an optical transmitter 70 and a chip 80, where the optical receiver 60 is connected with the chip 80 and is configured to receive an optical signal, convert the optical signal into an electrical signal and send the electrical signal to the chip 80; the optical transmitter 70 is connected with the chip 80 and is configured to convert the electrical signal into an optical signal and transmit the optical signal; and the chip 80 is configured to process the electrical signal, perform a read/write operation on an optical tag, and store and compare tag information.

In an implementation manner of embodiments of the present invention, the above optical read/write device further includes: a communication device, configured to perform communication with other devices.

The above chip 80 may send a read/write instruction through the optical transmitter 70 and receive information sent by the optical tag through the optical receiver 60 when the read/write operation is performed on the optical tag.

In embodiments of the present invention, the optical read/write device may be an active device, which may transmit light through the optical transmitter 70 to charge the passive optical tag and may also transmit pulsed light to the passive optical tag to transmit a corresponding data signal. The optical receiver 60 receives the data signal transmitted by the passive optical tag. The chip 80 processes the data signal, and controls a working state of the optical transmitter 60 and transmits corresponding information to the passive optical tag.

In embodiments of the present invention, the optical transmitter 70 may include: an LED, an LD and the like.

Fig. 6 is a schematic diagram illustrating an optical frequency identification system according to embodiments of the present invention. As shown in Fig. 6, the system includes: a passive optical tag 1 and an optical read/write device 2, where the passive optical tag 1 and the optical read/write device 2 are as described above in embodiments of the present invention, and are not repeated here.

The optical read/write device 2 may send a corresponding instruction to the passive optical tag 1. The passive optical tag 1 transmits a corresponding reply through an own optical transmitter after receiving the instruction. The optical read/write device receives the reply and then processes the reply, and informs the passive optical tag of reception and ending if information is sufficient; and if the information is insufficient, the optical read/write device further sends an inquiry instruction, and the passive optical tag further sends a reply as required, the above processes would not stop until the optical read/write device is satisfied. The optical read/write device is in non-contact with the passive optical tag, but a distance between the optical read/write device and the passive optical tag is very short and is generally limited to be very short, and data transmission between the optical read/write device and the passive optical tag is realized through an optical wireless communication point-to-point (P2P) technology.

A communication process between the optical read/write device and the passive optical tag may include: the optical read/write device firstly sends an inquiry instruction, and the passive optical tag replies a current state according to the instruction, such as some working parameters that the identity of the passive optical tag is blank or the passive optical tag has identity information and the like. Then, the optical read/write device sends a corresponding instruction according to a state of the passive optical tag. For example, the optical read/write device assigns identity information to the passive optical tag if the passive optical tag is blank; and the optical read/write device may require the passive optical tag to feed back if the passive optical tag has identity information. The optical read/write device may make an assessment according to feedback information; and the optical read/write device re-assigns new identity information to the passive optical tag if the feedback information is not correct, and the passive optical tag feeds back the new information after completing execution. The optical read/write device makes an re-assessment about the feedback new information; and, the optical read/write device sends ending if the new feedback information is completely correct; and meanwhile, the passive optical tag replies reception and ending.

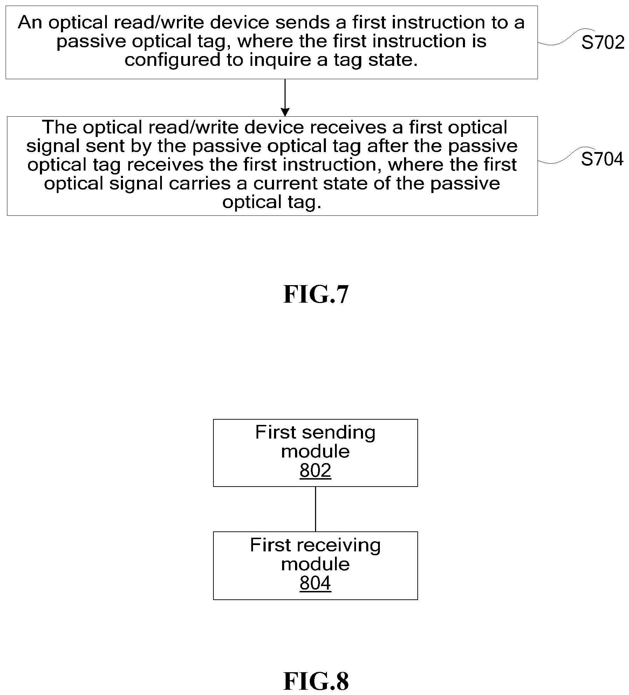

Fig. 7 is a flow chart illustrating a read/write method of a passive optical tag according to embodiments of the present invention. As shown in Fig. 7, the method includes step S702-step S704.

In S702, an optical read/write device sends a first instruction to the passive optical tag, where the first instruction is configured to inquire a tag state.

In S704, the optical read/write device receives a first optical signal sent by the passive optical tag after the passive optical tag receives the first instruction, where the first optical signal carries a current state of the passive optical tag.

In an implementation manner of embodiments of the present invention, the optical read/write device may send a second instruction to the passive optical tag, where the second instruction is configured to inquire identity information of the passive optical tag. The optical read/write device receives a second optical signal sent by the passive optical tag after the passive optical tag receives the second instruction, where the second optical signal carries identity information.

Further, the optical read/write device may judge whether the received identity information is correct, and the optical read/write device may assign new identity information to the passive optical tag if the received identity information is not correct.

Further, the optical read/write device may judge whether the received identity information is blank, and the optical read/write device may assign new identity information to the passive optical tag if the received identity information is blank.

In an implementation manner of embodiments of the present invention, the optical read/write device may send a third instruction to the passive optical tag, where the third instruction is configured to assign identity information to the passive optical tag.

In an implementation manner of embodiments of the present invention, the optical read/write device may send a fourth instruction to the passive optical tag, where the fourth instruction is configured to instruct that communication is ended; and the optical read/write device receives a fourth optical signal sent by the passive optical tag after the passive optical tag receives the fourth instruction, where the fourth optical signal carries information of agreeing to the ending.

Fig. 8 is a structural block diagram illustrating a read/write device of a passive optical tag according to embodiments of the present invention. As shown in Fig. 8, the read/write device includes: a first sending module 802, configured to send a first instruction to the passive optical tag, where the first instruction is configured to inquire a tag state; and a first receiving module 804, configured to receive a first optical signal sent by the passive optical tag after the passive optical tag receives the first instruction, where the first optical signal carries a current state of the passive optical tag.

In an implementation manner of embodiments of the present invention, the above device further includes: a second sending module, configured to sending a second instruction to the passive optical tag, where the second instruction is configured to inquire identity information of the passive optical tag; and a second receiving module, configured to receive a second optical signal sent by the passive optical tag after the passive optical tag receives the second instruction, where the second optical signal carries the identity information.

Further, the device may include: a first judgment module, configured to judge whether the identity information is correct; and a first assigning module, configured to assign new identity information to the passive optical tag when the identity information is wrong.

Further, the above device may include: a second judgment module, configured to judge whether the identity information is blank; and a second assigning module, configured to assign new identity information to the passive optical tag when the identity information is blank.

In an implementation manner of embodiments of the present invention, the above device further includes: a third sending module, configured to send a third instruction to the passive optical tag, where the third instruction is configured to assign identity information to the passive optical tag.

In an implementation manner of embodiments of the present invention, the above device further includes: a fourth sending module, configured to send a fourth instruction to the passive optical tag, where the fourth instruction is configured to instruct that communication is ended; and a fourth receiving module, configured to receive a fourth optical signal sent by the passive optical tag after the passive optical tag receives the fourth instruction, where the fourth optical signal carries information of agreeing to the ending.

The above passive optical tag and optical read/write device of embodiments of the present invention may be applied to a variety of scenes. An application in a telecommunication wiring system is taken as an example for description in embodiments of the present invention.

The above system of embodiments of the present invention is preferably applied in an optical fiber network. An application in the optical fiber network is taken as an example for describing embodiments of the present invention.

With reference to the system shown in Fig. 6, reading/writing for the tag information is initiated by a control chip in the optical read/write device. The passive optical tag mainly stores identity information position information. These information are assigned by the optical read/write device and may be modified by the optical read/write device. Working power supply of the passive optical tag is obtained through light conversion by a photocell, and the passive optical tag may be charged by the optical read/write device and external light sources.

With reference to the optical read/write device shown in Fig. 5, the optical read/write device may be an active device. The optical transmitter has a role of charging the passive optical tag and sending a data signal to the passive optical tag; and, the optical receiver has a role of receiving an optical signal sent by the passive optical tag; and finally, the chip may receive an instruction of an external network manager, to start reading/writing for the passive optical tag. Identity information and position information may be assigned to a blank passive optical tag, reading and comparing may also be performed to a tag with identity information, and modification regarding corresponding information may also be performed to the tag, and finally the optical read/write device transmits relevant information to the network manager or a control center for storage.

With reference to the passive optical tag shown in Fig. 3 or Fig. 4, the passive optical tag is passive. The photocell receives light of the optical read/write device or other external light sources and converts the light into a power supply for other units to use. The optical transmitter sends a reply signal according to requirements of the control chip; the optical receiver converts the received instruction of the optical read/write device into an electrical signal and transmits the electrical signal to the chip; and the chip can process the instruction and start the optical transmitter to reply, and the chip has a function of storing information.

With reference to the passive optical tag shown in Fig. 4, the photovoltaic cell receiver converts the light of the optical read/write device or other external light sources into the power supply for other units to use. Meanwhile, the data signal of the optical read/write device is converted into a changeable electrical signal of the output voltage of the optical read/write device and then the electrical signal is transmitted to the chip; the chip performs relevant processing on the instruction and starts the optical transmitter to reply; and the chip has a function of storing information.

In embodiments of the present invention, an intelligent ODN includes: a connecting box including a plurality of connector ports; and a plurality of cables, each of which includes opposite tail ends and corresponding connectors fixed on each of the tail ends, and each connector is configured to be detachably fixed in each of the connector ports, where each connector is provided with one above passive optical tag, where each passive optical tag stores own tag identity information; each connector port is provided with one optical read/write device, and each optical read/write device is arranged at a position that enables the optical read/write device to be in alignment to the passive optical tag on the connector when the connector is inserted into the connector port; each optical read/write device is configured to perform a read/write operation on a passive optical tag corresponding to the own optical read/write device; and each passive optical tag is configured to respond to a read/write operation of an optical read/write device corresponding to the own passive optical tag.

The passive optical tag is adopted in embodiments of the present invention, so that non-contact-type detection is realized, and there would be no interference in dense scenes.

In an implementation manner of embodiments of the present invention, the above optical read/write device is further configured to perform communication with a network management system, receive a message of the network management system and/or send information to the network management system.

In a preferable implementation manner of embodiments of the present invention, the optical read/write device may be configured to respond to a request of the network management system to perform a read/write operation on a passive optical tag corresponding to the own optical read/write device. Preferably, the optical read/write device may further report read information and other relevant information to the network management system.

In a preferable implementation manner of embodiments of the present invention, the above telecommunication wiring system may further include: a management device, configured to control each optical read/write device and report information reported by each optical read/write device to the network management system.

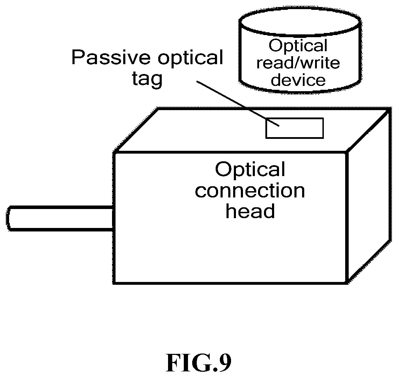

Fig. 9 is a schematic diagram illustrating an optical connection head according to embodiments of the present invention. As shown in Fig. 9, a passive optical tag is arranged on the optical connection head firstly; and when the optical connection head is inserted into a connecting box, an optical read/write device is positioned above the tag, which indicates that an optical fiber is in a connection state, and the tag is just below the optical read/write device.

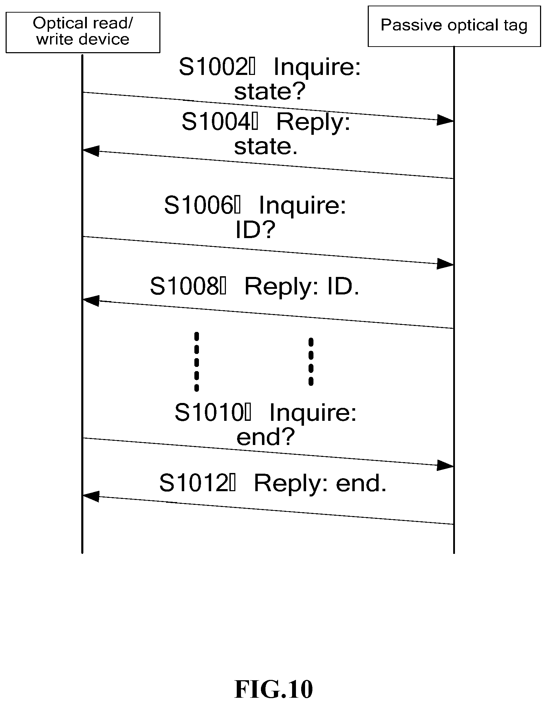

When performing reading/writing to a tag using the method, a systematic workflow is as shown in Fig. 10, and specific processes are described below.

Firstly, an optical read/write device receives an instruction of a network manager or a control center to perform reading/writing on the tag, and a control chip begins to start a read/write process. The passive optical tag is charged at first, and then following test steps are started to be executed.

In S1002, an inquiry instruction is sent to the passive optical tag, such as a tag state.

In S1004, the tag replies a current state, for example, the tag is blank or the tag has identity information.

In S1006, the optical read/write device distributes one piece of identity information to the passive optical tag if the tag has blank identity information or an existing identity information and position information are required to be cleared; and the optical read/write device requires the passive optical tag to report identity information if the tag has a correct identity information.

In S1008, the passive optical tag reports current own identity information after completing execution.

In S1010, the optical read/write device verifies the identity information; if the identity information does not meet requirements, the optical read/write device re-assigns new identity information to the passive optical tag; the passive optical tag repeats S808; then the optical read/write device makes an re-assessment about the information; and, S806 to S810 are repeated if the optical read/write device is not satisfied; and the optical read/write device sends an ending instruction if feedback information meets requirements; and

in S1012, the passive optical tag replies ending and confirmation after receiving the ending instruction.

The passive optical tag and the read/write device of embodiments of the present invention, as shown in Fig. 6, may also be used in many short-distance application scenes, such as a transportation card, a bank card, a work card of a company, a door card of a guest of a hotel and the like.

Firstly, the passive optical tag may be arranged on these cards; the read/write device is arranged at different places according to different requirements; for example, a read/write device of a transportation card may be arranged on a taxi, a bus or a subway station; a read/write device of a bank card may be arranged on a branch of a bank; a read/write device of a work card of a company may be arranged at a gate of a building, so as to facilitate staff to punch in; and a read/write device of a door card of a guest of a hotel may be arranged on a door lock, so as to facilitate the guest to open the door.

In a word, these short-distance application scenes are also very suitable for the device of embodiments of the present invention.

It can be seen from the above descriptions that the present invention achieves following technical effects: the non-contact-type passive optical tag is charged through a photocell technology, and passive and non-contact-type read/write for the tag is realized by adopting a method and an device for reading and identifying the optical tag based on an optical wireless technology.

Apparently, those skilled in the art should understand that all the above modules or steps of the present invention may be realized by a universal calculating device and may be centralized on a single calculating device or may be distributed on a network formed by a plurality of calculating devices. Alternatively, all the above modules or steps of the present invention may be realized by an executable program code of the calculating device, so that all the above modules or steps of the present invention may be stored in a storage device and then executed by the calculating device. Moreover, under some conditions, the shown or described steps may be executed according to a sequence different from the sequence here, or the steps are respectively made into a plurality of integrated circuit modules, or a plurality of modules or steps in all the above modules or steps are made into a single integrated circuit module to realize. In this way, the present invention is not limited to a combination of any specific hardware and software.

The above descriptions are only preferable embodiments of the present invention, rather than a limit to the present invention. Those skilled in the art should understand that the present invention may have a variety of modifications and changes. Any modification, equivalent replacement, improvement and the like made within the spirit and the principle of the present invention shall be included in the protection scope of the present invention.

### Industrial Applicability

As mentioned above, through above embodiments and preferable implementation manners, the passive optical tag stores and reads tag information in a non-contact manner without need for connection with a power supply, and the passive optical tag is small in volume and is suitable for an application scene with dense optical connection heads.

## Claims

1. A passive optical tag, comprising: an optical receiver, an optical transmitter, a chip and a photocell, wherein
the optical receiver is connected with the chip and is configured to receive an optical signal, convert the optical signal into an electrical signal and send the electrical signal to the chip;
the chip is configured to process the electrical signal and store tag information;
the optical transmitter is connected with the chip and is configured to modulate the electrical signal sent by the chip into an optical signal and transmit the optical signal obtained by modulation; and
the photocell is configured to convert optical energy into electrical energy and store the electrical energy, and provide electrical energy to the optical receiver, the optical transmitter and the chip.

2. The passive optical tag according to claim 1, wherein the photocell is configured to receive the optical energy from an optical read/write device of the passive optical tag and/or receive the optical energy from other optical sources.

3. The passive optical tag according to claim 1, wherein the optical transmitter comprises a light emitting diode LED.

4. A passive optical tag, comprising: an optical transmitter, a chip and a photovoltaic cell receiver, wherein
the photovoltaic cell receiver is connected with the chip, and is configured to convert optical energy into electrical energy and provide electrical energy to the chip and the optical transmitter; and, receive a pulse-type optical signal, convert the pulse-type optical signal into a digital electrical signal and send the digital electrical signal to the chip;
the chip is configured to process the digital electrical signal and store tag information; and
the optical transmitter is connected with the chip and is configured to modulate the electrical signal sent by the chip into an optical signal and transmit the optical signal obtained by modulation.

5. The passive optical tag according to claim 4, the optical transmitter comprises: an LED.

6. A optical read/write device, comprising: an optical receiver, an optical transmitter and a chip, wherein
the optical receiver is connected with the chip and is configured to receive an optical signal, convert the optical signal into an electrical signal and send the electrical signal to the chip;
the chip is configured to process the electrical signal, and perform a read/write operation on an optical tag; and
the optical transmitter is connected with the chip and is configured to modulate the electrical signal of the chip into an optical signal and transmit the optical signal obtained by modulation.

7. The optical read/write device according to claim 6, wherein the optical transmitter comprises:
an LED and/or a laser diode LD.

8. The optical read/write device according to claim 6, further comprising: a communication device, configured to perform communication with other devices.

9. A passive optical tag system, comprising: a passive optical tag and an optical read/write device, wherein
the passive optical tag comprises: a first optical receiver, a first optical transmitter, a first chip and a photocell, wherein
the first optical receiver is connected with the first chip and is configured to receive a first optical signal, convert the first optical signal into a first electrical signal and send the first electrical signal to the first chip;
the first chip is configured to process the first electrical signal and store tag information;
the first optical transmitter is connected with the first chip and is configured to modulate the electrical signal sent by the first chip into a second optical signal and transmit the second optical signal; and
the photocell is configured to convert optical energy into electrical energy and store the electrical energy, and provide electrical energy to the first optical receiver, the first optical transmitter and the first chip; and
the optical read/write device comprises: a second optical receiver, a second optical transmitter and a second chip, wherein
the second optical receiver is connected with the second chip and is configured to receive a third optical signal, convert the third optical signal into a second electrical signal and send the second electrical signal to the second chip;
the second chip is configured to process the second electrical signal and perform a read/write operation on the passive optical tag; and
the second optical transmitter is connected with the second chip and is configured to modulate the electrical signal of the second chip into a fourth optical signal and transmit the fourth optical signal.

10. A passive optical tag system, comprising: a passive optical tag and an optical read/write device, wherein
the passive optical tag comprises: a first optical transmitter, a first chip and a photovoltaic cell receiver, wherein
the photovoltaic cell receiver is connected with the first chip and is configured to convert optical energy into electrical energy and provide electrical energy to the first chip and the first optical transmitter; and receive a pulse-type optical signal, convert the pulse-type optical signal into a pulse-type electrical signal and send the pulse-type electrical signal to the first chip;
the first chip is configured to process the pulse-type electrical signal and store tag information; and
the first optical transmitter is connected with the first chip and is configured to modulate the electrical signal sent by the first chip into a first optical signal and transmit the first optical signal; and
the optical read/write device comprises: an optical receiver, a second optical transmitter and a second chip, wherein
the optical receiver is connected with the second chip and is configured to receive a second optical signal, convert the second optical signal into an electrical signal and send the electrical signal to the second chip;
the second chip is configured to process the electrical signal and perform a read/write operation on the passive optical tag; and
the second optical transmitter is connected with the second chip and is configured to modulate the electrical signal of the second chip into a second optical signal and transmit the second optical signal.

11. An intelligent optical distribution network, comprising: a connecting box comprising a plurality of connector ports; and a plurality of cables, wherein each cable comprises opposite tail ends and corresponding connectors fixed on each of the tail ends, and each connector is configured to be detachably fixed in each of the connector ports;
each connector is provided with one passive optical tag in any of claims 1-5, wherein each passive optical tag stores own tag identity information;
each connector port is provided with one optical read/write device in claim 6 or 7, and each optical read/write device is arranged at a position that enables the optical read/write device to be in alignment to the passive optical tag on the connector when the connector is inserted into the connector port; and
each optical read/write device is configured to perform a read/write operation on a passive optical tag corresponding to the own optical read/write device; and each passive optical tag is configured to respond to a read/write operation of an optical read/write device corresponding to the own passive optical tag.

12. The intelligent optical distribution network according to claim 11, wherein each optical read/write device is further configured to perform communication with a network management system and receive a message of the network management system and/or send information to the network management system.

13. The intelligent optical distribution network according to claim 12, wherein each optical read/write device is configured to respond to a request of the network management system to perform a read/write operation on a passive optical tag corresponding to the own optical read/write device.

14. The intelligent optical distribution network according to any of claims 11-13, further comprising:
a management device, configured to control each optical read/write device and report information reported by each optical read/write device to the network management system.

15. A read/write method of a passive optical tag, comprising:
sending, by an optical read/write device, a first instruction to the passive optical tag, wherein the first instruction is configured to inquire a tag state; and
receiving, by the optical read/write device, a first optical signal sent by the passive optical tag after the passive optical tag receives the first instruction, wherein the first optical signal carries a current state of the passive optical tag.

16. The method according to claim 15, further comprising:
sending, by the optical read/write device, a second instruction to the passive optical tag, wherein the second instruction is configured to inquire identity information of the passive optical tag; and
receiving, by the optical read/write device, a second optical signal sent by the passive optical tag after the passive optical tag receives the second instruction, wherein the second optical signal carries the identity information.

17. The method according to claim 16, further comprising:
judging, by the optical read/write device, whether the identity information is correct; and
assigning, by the optical read/write device, new identity information to the passive optical tag when the identity information is wrong.

18. The method according to claim 16, further comprising:
judging, by the optical read/write device, whether the identity information is blank; and
assigning, by the optical read/write device, new identity information to the passive optical tag when the identity information is blank.

19. The method according to claim 15, further comprising:
sending, by the optical read/write device, a third instruction to the passive optical tag, wherein the third instruction is configured to assign identity information to the passive optical tag.

20. The method according to any of claims 15-19, further comprising:
sending, by the optical read/write device, a fourth instruction to the passive optical tag, wherein the fourth instruction is configured to instruct that communication is ended; and
receiving, by the optical read/write device, a fourth optical signal sent by the passive optical tag after the passive optical tag receives the fourth instruction, wherein the fourth optical signal carries information of agreeing to the ending.

21. A read/write device of a passive optical tag, comprising:
a first sending module, configured to send a first instruction to the passive optical tag, wherein the first instruction is configured to inquire a tag state; and
a first receiving module, configured to receive a first optical signal sent by the passive optical tag after the passive optical tag receives the first instruction, wherein the first optical signal carries a current state of the passive optical tag.

22. The device according to claim 20, further comprising:
a second sending module, configured to send a second instruction to the passive optical tag, wherein the second instruction is configured to inquire identity information of the passive optical tag; and
a second receiving module, configured to receive a second optical signal sent by the passive optical tag after the passive optical tag receives the second instruction, wherein the second optical signal carries the identity information.

23. The device according to claim 22, further comprising:
a first judgment module, configured to judge whether the identity information is correct; and
a first assigning module, configured to assign new identity information to the passive optical tag when the identity information is wrong.

24. The device according to claim 22, further comprising:
a second judgment module, configured to judge whether the identity information is blank; and
a second assigning module, configured to assign new identity information to the passive optical tag when the identity information is blank.

25. The device according to claim 21, further comprising:
a third sending module, configured to send a third instruction to the passive optical tag, wherein the third instruction is configured to assign identity information to the passive optical tag.

26. The device according to any of claims 21-25, further comprising:
a fourth sending module, configured to send a fourth instruction to the passive optical tag, wherein the fourth instruction is configured to instruct that communication is ended; and
a fourth receiving module, configured to receive a fourth optical signal sent by the passive optical tag after the passive optical tag receives the fourth instruction, wherein the fourth optical signal carries information of agreeing to the ending.
